(19) Europäisches Patentamt
European Patent Office
Office européen des brevets

(11) EP 2 436 745 A1

(12) EUROPEAN PATENT APPLICATION
published in accordance with Art. 153(4) EPC

(43) Date of publication:
04.04.2012 Bulletin 2012/14

(21) Application number: 10780445.2

(22) Date of filing: 18.05.2010

(51) Int Cl.:
*C09J 175/04* (2006.01) *C09J 175/06* (2006.01)
*C09J 175/08* (2006.01) *G06K 19/077* (2006.01)

(86) International application number:
PCT/JP2010/058343

(87) International publication number:
WO 2010/137490 (02.12.2010 Gazette 2010/48)

(84) Designated Contracting States:
AL AT BE BG CH CY CZ DE DK EE ES FI FR GB GR HR HU IE IS IT LI LT LU LV MC MK MT NL NO PL PT RO SE SI SK SM TR

(30) Priority: 28.05.2009 JP 2009128647

(71) Applicant: Henkel AG & Co. KGaA
40589 Düsseldorf (DE)

(72) Inventors:
- MATSUKI, Yuichi
Minoo-shi
Osaka 562-8586 (JP)
- YAMAUCHI, Masaru
Minoo-shi
Osaka 562-8586 (JP)
- YOSHIDA, Yoshio
Minoo-shi
Osaka 562-8586 (JP)
- HAYAKAWA, Tadashi
Minoo-shi
Osaka 562-8586 (JP)
- TAKAMORI, Ai
Minoo-shi
Osaka 562-8586 (JP)

(74) Representative: Stromberg, Christian
Henkel AG & Co. KGaA
Henkelstraße 67
40589 Düsseldorf (DE)

# (54) MOISTURE-CURING HOT MELT ADHESIVE FOR IC CARD

(57) An object of the present invention is to provide a moisture-curable hot melt adhesive which is excellent in total performances as the moisture-curable hot melt adhesive, such as heat resistance, adhesiveness and solidification performance, and also does not cause deterioration of quality and productivity of an IC card to be produced. Another object is to provide an IC card obtained by applying the moisture-curable hot melt adhesive.

The object is achieved by a moisture-curable hot melt adhesive for an IC card, including (A) a urethane prepolymer having an isocyanate group at the end, wherein the urethane prepolymer (A) includes a chemical structure (A1) derived from a polyesterpolyol (a1) obtained by the reaction of a diol with a dicarboxylic acid having 10 or less carbon atoms, a shear elastic modulus (at 40°C) in an uncured state under moisture is from ($1 \times 10^4$) to ($1 \times 10^8$) Pa, and a shear elastic modulus (at 80°C) in an uncured state under moisture is from ($1 \times 10^0$) to ($1 \times 10^4$) Pa. An IC card can be produced preferably by laminating a decorative material and a base material using the moisture-curable hot melt adhesive.

EP 2 436 745 A1

## Description

Technical Field

The present invention relates to a moisture-curable hot melt adhesive used in the production of an IC card, and an IC card obtained by applying the moisture-curable hot melt adhesive.

Background Art

There has widely been used an IC card in which IC chips are mounted on an ID card such as an identification card, a cash card or a credit card. A kind of adhesives used in the production of such an IC card includes a moisture-curable hot melt adhesive (see, for example, Patent Documents 1 to 3).

The moisture-curable hot melt adhesive has a feature that the adhesive melted by heating is physically solidified by a decrease in temperature, and then chemically cured by moisture. Therefore, as used herein, the term "solidification" means that an adhesive physically changes into a solid state from a melted state by a decrease in temperature, and the term "curing" means that an adhesive becomes harder as a result of a chemical change by moisture.

Since the IC card has a large memory capacity and high security as compared with a magnetic card, it is expected to be also employed as an identification card, a cash card, a credit card and the like. Therefore, it is desired for a moisture-curable hot melt adhesive to maintain quality of the obtained IC card and to prevent deterioration of productivity of the IC card.

As described in Patent Document 1, in order to produce an IC card, first, a molding resin or resin film in which IC chips are embedded is prepared as a base material. A moisture-curable hot melt adhesive melted by heating is applied on a decorative material such as a resin (for example, polyethylene terephthalate, etc.) film, and the above base material and the above decorative material are laminated to each other. Then, the moisture-curable hot melt adhesive is physically solidified by a decrease in temperature to obtain a laminate of the base material with the decorative material. When the base material and the decorative material are continuous sheet-like, the obtained continuous sheet-like laminate is cut into an appropriate size to obtain a sheet-like laminate. The obtained laminate is stored in a state where plurality laminates are laid one upon another for a fixed period. During the storage, the moisture-curable hot melt adhesive is further cured by moisture, and thus the strength increases. The laminate is stamped into individual IC cards.

When the IC card is produced using the moisture-curable hot melt adhesive, since tackiness slowly disappears by a decrease in temperature of the moisture-curable hot melt adhesive after solidification (that is, tack-free time is long), laminates laid one upon another are bonded to each other at the cutting positions thereof and thus it is not preferable from the viewpoint of productive efficiency. Furthermore, since a heat shrinkage ratio (also referred to as a "solidification shrinkage ratio") of the moisture-curable hot melt adhesive by a decrease in temperature is too large, the card undergoes shrinkage and thus the surface may not sometimes becomes uniform. In other words, unevenness of a card surface occurs and an IC card with the raising IC chip mounting portion is produced. Therefore, it is not preferred from the viewpoint of quality of the IC card.

The moisture-curable hot melt adhesive can be applied at comparatively low temperature. However, since the tack-free time is comparatively long, use of the moisture-curable hot melt adhesive may sometimes cause deterioration of cutting property of the laminate and productivity of the IC card, taking account of cutting the laminate into a sheet-like laminate with an appropriate size and producing the IC card by stamping, as described above.

Patent Document 1: JP2000-148959A
Patent Document 2: JP2005-036128A
Patent Document 3: JP2005-332384A

DISCLOSURE OF THE INVENTION

Problems to be Solved by the Invention

The present invention has been made so as to solve these problems and an object of the present invention is to provide a moisture-curable hot melt adhesive which is excellent in total performances as the moisture-curable hot melt adhesive, such as heat resistance, adhesiveness and solidification performance, and also does not cause deterioration of quality and productivity of an IC card to be produced. Another object of the present invention is to provide an IC card obtained by applying the moisture-curable hot melt adhesive.

Means for Solving the Problems

The present inventors have intensively studied and found that the above objects can be achieved, surprisingly, by adjusting a shear elastic modulus in an uncured state under moisture (or a moisture-uncured state) of a moisture-curable hot melt adhesive having a specific chemical structure within a specific range. Thus, the present invention has been completed.

That is, the present invention provides, in an aspect, a moisture-curable hot melt adhesive for an IC card, including a urethane prepolymer (A) having an isocyanate group at the end, wherein the urethane prepolymer (A) includes a chemical structure (A1) derived from a polyesterpolyol (a1) obtained by the reaction of a diol with a dicarboxylic acid having 10 or less carbon atoms, a shear elastic modulus (at 40˚C) in an uncured state under moisture is from ($1 \times 10^4$) to ($1 \times 10^8$) Pa, and a shear elastic modulus (at 80˚C) in an uncured state under moisture is from ($1 \times 10^0$) to ($1 \times 10^4$) Pa.

In the present invention, the chemical structure (A1) is preferably derived from a polyesterpolyol (a1) obtained by the reaction of a diol with adipic acid.

In an embodiment of the present invention, there is provided the moisture-curable hot melt adhesive for an IC card, wherein the urethane prepolymer (A) further includes a chemical structure (A2) derived from a polyesterpolyol (a2) obtained by the reaction of a diol with an aliphatic dicarboxylic acid having 11 or more and 18 or less carbon atoms, and/or a chemical structure (A3) derived from a polyetherpolyol (a3).

In another embodiment of present invention, there is provided the moisture-curable hot melt adhesive for an IC card, wherein in an uncured state under moisture, a melting point is from 40 to 90˚C, a melt viscosity at 120˚C is from 1,500 to 30,000 mPa·s, and the content of an isocyanate group is from 0.5% by weight to 8.0% by weight.

The present invention provides, in another aspect, an IC card obtained by using the above moisture-curable hot melt adhesive for an IC card.

The present invention provides, in an embodiment, an IC card obtained by laminating a decorative material and a base material using the above moisture-curable hot melt adhesive for an IC card.

In a preferred embodiment of the present invention, there is provided an IC card obtained by applying the above moisture-curable hot melt adhesive for an IC card on the above decorative material at 100 to 130˚C and, after being left standing to cool, laying the decorative material and the base material one upon another, and heating again to 60 to 90˚C.

Effects of the Invention

Since the moisture-curable hot melt adhesive for an IC card according to the present invention is a moisture-curable hot melt adhesive for an IC card, including an urethane prepolymer (A) having an isocyanate group at the end, wherein the urethane prepolymer (A) includes a chemical structure (A1) derived from a polyesterpolyol (a1) obtained by the reaction of a diol with a dicarboxylic acid having 10 or less carbon atoms, a shear elastic modulus (at 40˚C) in an uncured state under moisture is from ($1 \times 10^4$) to ($1 \times 10^8$) Pa, and a shear elastic modulus (at 80˚C) in an uncured state under moisture is from ($1 \times 10^0$) to ($1 \times 10^4$) Pa, it is excellent in total performances as the moisture-curable hot melt adhesive, such as heat resistance, adhesiveness and solidification performance and enables quick disappearance of tackiness, and also does not cause deterioration of quality and productivity of an IC card to be produced.

The moisture-curable hot melt adhesive for an IC card of the present invention has more excellent solidification performance since the chemical structure (A1) is derived from a polyesterpolyol (a1) obtained by the reaction of a diol with adipic acid. Therefore, productivity of the obtained IC card is more improved.

In the above moisture-curable hot melt adhesive for an IC card, when the urethane prepolymer (A) further includes a chemical structure (A2) derived from a polyesterpolyol (a2) obtained by the reaction of a diol with an aliphatic dicarboxylic acid having 11 or more and 18 or less carbon atoms, and/or a chemical structure (A3) derived from a polyetherpolyol (a3), solidification performance is further improved, and thus leading to an adhesive which is totally more excellent in heat resistance, adhesiveness and the like. Therefore, performances and productivity of the obtained IC card can be maintained at a high level.

Regarding the above moisture-curable hot melt adhesive for an IC card, in an uncured state under moisture (or a moisture-uncured state), when a melting point is from 40 to 90˚C, a melt viscosity at 120˚C is from 1,500 to 30,000 mPa·s, and the content of an isocyanate group is from 0.5% by weight to 8.0% by weight, not only solidification performance, heat resistance and adhesiveness are more excellent, but also coatability is more improved, and thus performances and productivity of the IC card can be more improved.

Since the IC card according to the present invention is obtained by using the above moisture-curable hot melt adhesive for an IC card, the quality and productivity of the IC card to be produced do not deteriorate.

Since the IC card according to the present invention is obtained by laminating a decorative material and a base material using the above moisture-curable hot melt adhesive for an IC card, the IC card has a more uniform surface and is excellent in cutting property of the laminate. Since the IC card according to the present invention is obtained by

laminating a decorative material and a base material using a moisture-curable hot melt adhesive having excellent solidification performance, after cutting a continuous laminate, sheet-like laminates can be left to stand in a state where laminates are laid one upon another, and thus productive efficiency of the IC card is more excellent.

Since the above IC card is obtained by applying the above moisture-curable hot melt adhesive for an IC card on the above decorative material at 100 to 130˚C and, after being left standing to cool, laying the decorative material and the base material one upon another, and heating again to 60 to 90˚C, the obtained IC card has a more uniform surface and is more excellent in cutting property of the laminate.

## EMBODIMENTS FOR CARRYING OUT THE INVENTION

As used herein, the term "(A) urethane prepolymer having an isocyanate group at the end" (hereinafter may also be referred to as a "urethane prepolymer (A)") is not particularly limited as long as it is commonly a urethane prepolymer having an isocyanate group at the end, includes a "chemical structure (A1) derived from a polyesterpolyol (a1) obtained by the reaction of a diol with a dicarboxylic acid having 10 or less carbon atoms" (hereinafter may also be referred to as a "chemical structure (A1)") and is capable of obtaining the moisture-curable hot melt adhesive according to the present invention. Such a urethane prepolymer (A) can be obtained by reacting a polyol including a "polyesterpolyol (a1)" with an isocyanate compound, using a conventionally known method.

In the present invention, the urethane prepolymer (A) includes, as an essential component, a chemical structure (A1) derived from a polyesterpolyol (a1), and the polyesterpolyol (a1) can be obtained by the reaction of a diol with a dicarboxylic acid having 10 carbon atoms or less. The chemical structure (A1) is derived from the polyesterpolyol (a1).

Examples of the "diol" include ethylene glycol, 1-methylethylene glycol, 1-ethylethylene glycol, propylene glycol, butanediol, pentanediol, hexanediol, heptanediol, octanediol, nonanediol, decanediol, neopentyl glycol, 2-methyl-1,3-propanediol, cyclohexanedimethanol, 2,4-dimethyl-1,5-pentanediol and the like.

At least one kind selected from ethylene glycol, butanediol, hexanediol, octanediol and decanediol is preferable. These diols used to obtain the polyesterpolyol (a1) can be used alone, or used in combination.

The term "dicarboxylic acid having 10 carbon atoms or less" means that the number of carbon atoms in the dicarboxylic acid molecule thereof is 10 or less, including the carboxyl group, and may be an aliphatic dicarboxylic acid, an alicyclic dicarboxylic acid or an aromatic dicarboxylic acid. Specific examples thereof include succinic acid, adipic acid, sebacic acid, suberic acid, cyclohexane-trans-1,4-dicarboxylic acid and terephthalic acid. In the present invention, adipic acid is preferably used. The dicarboxylic acids having 10 carbon atoms or less can be used alone, or used in combination.

Examples of the "chemical structure (A1)" derived from the "polyesterpolyol (a1)" obtained by the reaction of a diol with a dicarboxylic acid having 10 carbon atoms or less include a chemical structure including, as a repeated unit, a structure represented by the following chemical formula (1):

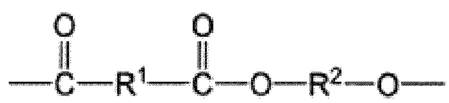

(I)

wherein $R^1$ is selected from an alkylene group, a cycloalkylene group and a phenylene group which groups have 8 or less carbon atoms in total, and which groups may be substituted with any substituent at any position; and $R^2$ is selected from chain and cyclic alkylene groups which may be substituted or not substituted with any substituent at any position.

In the chemical formula (I), it is preferred that:

$R^1$ is selected from linear alkylene groups having 2, 4, 6 and 8 carbon atoms, a cyclohexylene group, and a 1,4-phenylene group, and
$R^2$ is selected from chain and cyclic alkylene groups which may be substituted or not substituted with any substituent at any position.

In the chemical formula (I), it is more preferred that:

$R^1$ is a linear alkylene group having 4 carbon atoms, and
$R^2$ is selected from chain and cyclic alkylene groups which may be substituted or not substituted with any substituent at any position.

In the chemical formula (I), it is still more preferred that:

$R^1$ is selected from linear alkylene groups having 2, 4, 6 and 8, a cyclohexylene group and a 1,4-phenylene group, and $R^2$ is selected from linear alkylene groups having 2, 4, 6, 8 and 10 carbon atoms.

In the chemical formula (I), it is particularly preferred that:

$R^1$ is a linear alkylene group having 4 carbon atoms,
$R^2$ is selected from linear alkylene groups having 2, 4, 6, 8 and 10 carbon atoms.

The chemical structures (A1) can be used alone, or used in combination.

As a preferred embodiment of the present invention, the urethane prepolymer (A) may further include a "chemical structure (A2) derived from polyesterpolyol (a2)" obtained by the reaction of an aliphatic dicarboxylic acid having 11 or more and 18 or less carbon atoms with a diol" (hereinafter may also be referred to as a "chemical structure (A2)") and/or a "chemical structure (A3) derived from polyetherpolyol (a3)" (hereinafter may also be referred to as a "chemical structure (A3)").

In the present invention, the urethane prepolymer (A) may optionally include a chemical structure (A2) derived from a polyesterpolyol (a2), and the polyesterpolyol (a2) can be obtained by the reaction of a diol with an aliphatic dicarboxylic acid having 11 or more and 18 or less carbon atoms. The chemical structure (A2) is derived from the polyesterpolyol (a2).

The term "aliphatic dicarboxylic acid having 11 or more and 18 or less carbon atoms" means that the number of carbon atoms included in the aliphatic dicarboxylic acid molecule is 11 or more and 18 or less, including the carboxyl group, and examples thereof include dodecanedioic acid, tetradecanedioic acid, hexadecanedioic acid and octadecanedioic acid. In the present invention, dodecanedioic acid is preferably used and a linear dodecanedioic acid is more preferable. The aliphatic dicarboxylic acids having 11 or more and 18 or less carbon atom can be used alone, or used in combination.

The "diol" for obtaining the polyesterpolyol (a2) is not particularly limited as long as a urethane prepolymer (A2) according to the present invention can be obtained. For example, the diol may be the same diol which was previously exemplified as the diol for obtaining the polyesterpolyol (a1). The diols can be used alone, or used in combination.

Examples of the "chemical structure (A2)" derived from the "polyesterpolyol (a2)" obtained by the reaction of a diol with an aliphatic dicarboxylic acid having 11 or more and 18 or less carbon atoms include a chemical structure including, as a repeating unit, a structure represented by the following chemical formula (II):

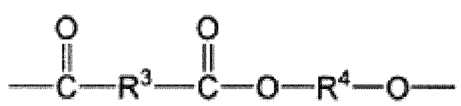 (II)

wherein $R^3$ is selected from an alkylene group having 9 or more and 16 or less carbon atoms which may be substituted or not substituted with any substituent at any position, and
$R^4$ is selected from chain and cyclic alkylene groups which may be substituted or not substituted with any substituent at any position.

In the chemical formula (II), it is preferred that:

$R^3$ is selected from linear alkylene groups having 10, 12, 14 and 16 carbon atoms, and
$R^4$ is selected from chain and cyclic alkylene groups which may be substituted or not substituted with any substituent at any position.

In the chemical formula (II), it is more preferred that:

$R^3$ is a linear alkylene group having 10 carbon atoms, and
$R^4$ is selected from chain and cyclic alkylene groups which may be substituted or not substituted with any substituent at any position.

In the chemical formula (II), it is still more preferred that:

$R^3$ is selected from linear alkylene groups having 10, 12, 14 and 16 carbon atoms, and
$R^4$ is selected from linear alkylene groups having 2, 4, 6, 8 and 10 carbon atoms.

In the chemical formula (II), it is particularly preferred that:

$R^3$ is a linear alkylene group having 10 carbon atoms, and
$R^4$ is selected from linear alkylene groups having 2, 4, 6, 8 and 10 carbon atoms.

The chemical structures (A2) can be used alone, or used in combination.
In the present invention, the urethane prepolymer (A) may optionally include a chemical structure (A3) derived from a polyetherpolyol (a3).
The term "(a3) polyetherpolyol" usually means those which are considered to be polyetherpolyols and is not particularly limited as long as the objective moisture-curable hot melt adhesive of the present invention can be obtained. Examples of the polyetherpolyol (a3) include polyethylene glycol (PEG), polyoxytetramethylene glycol (PTMG), polypropylene glycol (PPG) and the like. The polyetherpolyols (a3) can be used alone, or used in combination.
Examples of the "chemical structure (A3)" derived from "polyetherpolyol (a3)" include a chemical structure including, as a repeating unit, a structure represented by the following chemical formula (III):

$$-R^5-O- \qquad \text{(III)}$$

wherein $R^5$ is selected from chain and cyclic alkylene groups which may be substituted or not substituted with any substituent at any position.
In the chemical formula (III),
$R^5$ is preferably selected from a chain alkylene group having 2 to 4 carbon atoms, and more preferably selected from a chain alkylene group having 2 to 3 carbon atoms.
The chemical structures (A3) can be used alone, or used in combination.
The urethane prepolymer (A) according to the present invention may include a chemical structure (A1) and optionally includes a chemical structure (A2) and/or a chemical structure (A3) in a molecule. Therefore, the urethane prepolymer (A) may be a prepolymer including a chemical structure (A1), a prepolymer including chemical structures (A1) and (A2), a prepolymer including chemical structures (A1) and (A3), or a prepolymer including chemical structures (A1) to (A3). Furthermore, the urethane prepolymer (A) may be a combination of these prepolymers.
The method for producing the urethane prepolymer (A) is not particularly limited as long as the objective moisture-curable hot melt adhesive of the present invention can be obtained. The urethane prepolymer (A) can be usually produced by using a method capable of producing a urethane prepolymer.
In general, It is possible to obtain the objective urethane prepolymer (A) by preparing a polyesterpolyol (a1) and, optionally, a polyesterpolyol (a2) and/or a polyetherpolyol (a3), and reacting a polyol appropriately containing them with an isocyanate compound (b). It is also possible to obtain the objective urethane prepolymer (A) by preparing a polyesterpolyol (a1), and, optionally, a polyesterpolyol (a2) and/or a polyetherpolyol (a3), separately reacting these polyols (a1) to (a3) with an isocyanate compound, and then appropriately mixing the obtained respective prepolymers.
Since the urethane prepolymer (A) must have an isocyanate group at the end, a molar ratio of the isocyanate compound (b) to the total of polyols (molar ratio of NCO/OH) must be more than 1, and preferably from 1.4 to 2.2. As used herein, the term "total of polyols" is the total of polyol which includes the polyol (a1) and optionally includes a polyesterpolyol (a2) and/or a polyetherpolyol (a3).
The isocyanate compound (b) according to the present invention is not particularly limited as long as the moisture-curable hot melt adhesive according to the present invention can be obtained, and it is possible to use those which are used in the production of a conventional polyurethane. The isocyanate compounds (b) can be used alone, or used in combination.
Specific examples of the isocyanate compound (b) include ethylene diisocyanate, ethylidene diisocyanate, propylene diisocyanate, butylene diisocyanate, hexamethylene diisocyanate, toluene diisocyanate, cyclopentylene-1,3-diisocyanate, cyclohexylene-1,4-diisocyanate, cyclohexylene-1,2-diisocyanate, 4,4'-diphenylmethane diisocyanate, 2,2'-diphenylpropane-4,4'-diisocyanate, p-phenylene diisocyanate, m-phenylene diisocyanate, xylylene diisocyanate, 1,4-naphthylene diisocyanate, 1,5-naphthylene diisocyanate, diphenyl-4,4'-diisocyanate, azobenzene-4,4'-diisocyanate, diphenylsulfone-4,4'-diisocyanate, dichlorohexamethylene diisocyanate, furfurylidene diisocyanate, 1-chlorobenzene-2,4-diisocyanate and the like. The isocyanate compounds (b) can be used alone, or used in combination.
The moisture-curable hot melt adhesive according to the present invention can contain other components (c) as long as they do not exert an adverse influence on the reaction of the polyol with the isocyanate compound (b) and are not also contrary to the object of the present invention. There is no particular limitation on the timing of the addition of other components (c) to the moisture-curable hot melt adhesive. For example, other components (c) may be added together with the polyol (a) and the isocyanate compound (b) when the urethane prepolymer (A) is synthesized. The urethane prepolymer (A) is synthesized by reacting the polyol (a) with the isocyanate compound (b), and then other components (c) may be added.

Examples of "other components (c)" include a tackifier resin, an antioxidant, a pigment, a photostabilizer, a flame retardant, a catalyst, a wax and the like.
Examples of the "tackifier resin" include a styrene-based resin, a terpene-based resin, an aliphatic petroleum resin, an aromatic petroleum resin, a rosin ester, an acrylic resin, a polyester resin which is not a polyol type and the like
Examples of the "plasticizer' include dioctyl phthalate, dibutyl phthalate, diisononyl adipate, dioctyl adipate, mineral spirit and the like.

Examples of the "antioxidant" include a phenol-based antioxidant, a phosphite-based antioxidant, a thioether-based antioxidant, an amine-based antioxidant and the like.
Examples of the "pigment" include titanium oxide, carbon black and the like.
Examples of the "photostabilizer" include benzotriazole, hindered amine, benzoate, benzotriazole and the like.
Examples of the "flame retardant" include a halogen-based flame retardant, a phosphorous-based flame retardant, an antimony-based flame retardant, a metal hydroxide-based flame retardant and the like.

Examples of the "catalyst" include metal catalysts, for example, tin catalysts (trimethyltin laurate, trimethyltin hydroxide, dibutyltin dilaurate, dibutyltin maleate, etc.), lead-based catalysts (lead oleate, lead naphthenate, lead octenoate, etc.) and other metal catalysts (naphthenic acid metal salt such as cobalt naphthenate); amine-based catalyst such as triethylenediamine, tetramethylethylenediamine, tetramethylhexylenediamine, diazabicycloalkenes and dialkylaminoalkylamines;and the like.
The "wax" is preferably wax such as paraffin wax and microcrystalline wax.

The thus obtained moisture-curable hot melt adhesive of the present invention is a kind of reactive hot melt type adhesives and is a solid at room temperature, and can be used as a reactive hot melt type adhesive using a conventional method. In general, it is used by melting with heating.

The moisture-curable hot melt adhesive according to the present invention can be suitably used for an IC card, and a shear elastic modulus (40˚C) in an uncured state under moisture is from ($1 \times 10^4$) to ($1 \times 10^8$) Pa and also a shear elastic modulus (80˚C) in an uncured state under moisture is from ($1 \times 10^0$) to ($1 \times 10^4$) Pa.

As used herein, the term "shear elastic modulus (40˚C) in an uncured state under moisture (or a moisture-uncured state)" means a shear elastic modulus immediately after the temperature reached 40˚C after raising the temperature of the moisture-curable hot melt adhesive of the present invention from room temperature (about 20˚C) at a predetermined temperature raising rate under the conditions blocked from moisture. The term "shear elastic modulus (80˚C) in an uncured state under moisture" means a shear elastic modulus immediately after the temperature reached 80˚C after raising the temperature of the moisture-curable hot melt adhesive of the present invention from room temperature (about 20˚C) at a predetermined temperature raising rate under the conditions blocked from moisture. In both cases, the shear elastic modulus was measured at 1 Hz.

When the shear elastic modulus (40˚C) in an uncured state under moisture is less than ($1 \times 10^4$) Pa, or the shear elastic modulus (80˚C) in an uncured state under moisture is less than ($1 \times 10^0$) Pa, solidification performance of the moisture-curable hot melt adhesive drastically deteriorates. When the shear elastic modulus (40˚C) in an uncured state under moisture is more than ($1 \times 10^8$) Pa, or the shear elastic modulus (80˚C) in an uncured state under moisture is more than ($1 \times 10^4$) Pa, heat resistance drastically deteriorates, thermal reactivation performance also deteriorates, and cutting property of the IC card also deteriorates.

In the present invention, the melting point of the moisture-curable hot melt adhesive for an IC card is preferably from 40 to 90˚C. When the melting point is lower than 40˚C, solidification performance of the adhesive may deteriorate and exhibition of the initial strength delays, and thus it may become impossible to obtain performances required as the hot melt adhesive. When the melting point is more than 90˚C, the melt viscosity of the adhesive may increase, and thus it may become impossible to have sufficient coatability at 100 to 130˚C at which the adhesive can be safely handled.
In the present description, the melting point of the moisture-curable hot melt adhesive for an IC card was measured by a differential scanning calorimeter (DSC), for example, DSC6220 (trade name) manufactured by SII NanoTechnology Inc. Specifically, after weighing 10 mg of a sample in an aluminum container, the measurement was carried out at a temperature raising rate of 10˚C/minute and a peak top of a fusion peak was regarded as a melting point.

In the moisture-curable hot melt adhesive for an IC card of the present invention, the melt viscosity at 120˚C is preferably from 1,500 to 30,000 mPa·s. When the melt viscosity at 120˚C is less than 1,500 mPa·s, adhesiveness between the decorative material and the base material may decrease in case of producing an IC card. When the melt viscosity at 120˚C is more than 30,000 mPa·s, coatability to the base material or decorative material may deteriorate.
As used herein, the term "melt viscosity at 120˚C" means the value measured by Brookfield Viscometer using a rotor No. 27.

In the moisture-curable hot melt adhesive for an IC card of the present invention, the content of isocyanate in an uncured state under moisture is preferably from 0.5 to 8.0% by weight. When the content of isocyanate is less than 0.5% by weight, heat resistance may deteriorate and thus cutting property of the obtained IC card may deteriorate. When the content of isocyanate is more than 8.0% by weight, it is not preferred from the viewpoint of environmental sanitation.

The thus obtained moisture-curable hot melt adhesive of the present invention is a kind of reactive hot melt type adhesives and is a solid at room temperature, and can be used as a reactive hot melt type adhesive using a conventional method. In general, it is used by melting with heating.

The IC card according to the present invention can be obtained by using the above moisture-curable hot melt adhesive. The IC card can be produced by laminating a "decorative material" on a surface of a "base material" using the moisture-curable hot melt adhesive according to the present invention. In case of producing the IC card, the moisture-curable hot melt adhesive may be applied on the base material side or decorative material side.

There is no particular limitation on the "base material" as long as the objective IC card can be produced, and examples of the base material include the followings: plastic materials such as polyethylene terephthalate, polycarbonate, polyurethane, polyethylene and polypropylene.
There is also no particular limitation on the form of the "base material", and the base material may be in the form of a molding resin, a film or a sheet.

The "decorative material" may be colorless or colored, or transparent or opaque, and examples thereof include a polyolefin resin, a polyester resin, an acetate resin, a polystyrene resin and a vinyl chloride resin. Examples of the polyolefin resin include polyethylene and polypropylene, and examples of the polyester resin include polyethylene terephthalate.

There is no particular limitation on the method for producing the IC card as long as the objective IC card can be produced. The IC card can be produced, for example, by the production method described in Patent Document 1 in Background Art. For example, the IC card is preferably produced by the following method. In the production of the IC card, it is not required to use a special device and a generally known production line composed of a conveyer, a coater, a press machine, a heater, a cutter and the like may be employed.

While conveying a decorative material by the conveyer, the moisture-curable hot melt adhesive of the present invention is applied on the decorative material using the coater. The application temperature is preferably controlled within a range from 100 to 130˚C by heating the moisture-curable hot melt adhesive using the heater. The decorative material is left standing to cool (to room temperature of about 20˚C to 25˚C), whereby, the moisture-curable hot melt adhesive is once solidified. The decorative material and the base material are laid one upon another to obtain a laminate, and the laminate is reheated to a temperature of 60 to 90˚C while taking the melting point of the moisture curable adhesive into consideration. The laminate is conveyed by a conveyer while allowing the moisture-curable hot melt adhesive (in an uncured state under moisture) to reflow, whereby, the moisture-curable hot melt adhesive is allowed to undergo moisture curing. After completion of the moisture curing of the moisture-curable hot melt adhesive, the laminate is cut into individual IC cards with an appropriate size using the cutter.

Since the IC card according to the present invention has a uniform surface and is excellent in cutting property, the decorative material and base material are not separated with each other even in case of producing the IC card by stamping from the laminate. Since the moisture-curable hot melt adhesive for an IC card having excellent solidification performance is applied, tackiness quickly disappears. Therefore, it becomes possible to be left to stand in a state where laminates are laid one upon another and thus productive efficiency of the IC card is improved.

Main embodiments of the present invention will be described below.

1. A moisture-curable hot melt adhesive for an IC card, including (A) a urethane prepolymer having an isocyanate group at the end, wherein the urethane prepolymer (A) includes a chemical structure (A1) derived from a polyesterpolyol (a1) obtained by the reaction of a diol with a dicarboxylic acid having 10 or less carbon atoms, a shear elastic modulus (at 40˚C) in an uncured state under moisture is from ($1 \times 10^4$) to ($1 \times 10^8$) Pa, and a shear elastic modulus (at 80˚C) in an uncured state under moisture is from ($1 \times 10^0$) to ($1 \times 10^4$) Pa.
2. The moisture-curable hot melt adhesive for an IC card according to the above 1, wherein the chemical structure (A1) is derived from a polyesterpolyol (a1) obtained by the reaction of a diol with adipic acid.
3. The moisture-curable hot melt adhesive for an IC card according to the above 1 or 2, wherein the urethane prepolymer (A) further includes a chemical structure (A2) derived from a polyesterpolyol (a2) obtained by the reaction of a diol with an aliphatic dicarboxylic acid having 11 or more and 18 or less carbon atoms, and/or a chemical structure (A3) derived from a polyetherpolyol (a3).
4. The moisture-curable hot melt adhesive for an IC card according to any one of the above 1 to 3, wherein in an uncured state under moisture, a melting point is from 40 to 90˚C, a melt viscosity at 120˚C is from 1,500 to 30,000 mPa·s, and the content of an isocyanate group is from 0.5% by weight to 8.0% by weight.
5. An IC card obtained by using the moisture-curable hot melt adhesive for an IC card according to any one of the above 1 to 4.
6. The IC card according to the above 5, which is obtained by laminating a decorative material and a base material using the moisture-curable hot melt adhesive for an IC card according to any one of the above 1 to 4.
7. The IC card according to the above 6, which is obtained by applying the moisture-curable hot melt adhesive for an IC card according to any one of the above 1 to 4 on the above decorative material at 100 to 130˚C and, after

being left standing to cool, laying the decorative material and the base material one upon another, and heating again to 60 to 90°C.

Examples

The present invention will be described in a detailed and specific manner by way of Examples and Comparative Examples, but these Examples are merely an embodiment of the present invention and the present invention should in no way be limited to these Examples.
The polyol (a), isocyanate compound (b) and other components (c) used in the production of moisture-curable hot melt adhesive compositions of Examples and Comparative Examples will be described below.
The followings were used as the polyesterpolyol (a1):

(a1-1): crystalline polyesterpolyol obtained from adipic acid and hexanediol (hydroxyl value = 31 mgKOH/g, manufactured by Hokoku Corporation under the trade name of HS 2H-351A),
(a1-2): crystalline polyesterpolyol obtained from adipic acid and hexanediol (hydroxyl value = 13 mgKOH/g, manufactured by Hokoku Corporation under the trade name of HS 2H-851A),
(a1-3): crystalline polyesterpolyol obtained from adipic acid, terephthalic acid and
hexanediol (hydroxyl value = 25 mgKOH/g, manufactured by Hokoku Corporation under the trade name of HS 2H-458T),
(a1-4): crystalline polyesterpolyol obtained from adipic acid and hexanediol (hydroxyl value = 112 mgKOH/g, manufactured by Nippon Polyurethane Industry Co., Ltd. under the trade name of NIPPORAN 164),
(a1-5): crystalline polyesterpolyol obtained from sebacic acid and hexanediol (hydroxyl value = 32 mgKOH/g, manufactured by Hokoku Corporation under the trade name of HS 2H-350S), and
(a1-6): crystalline polyesterpolyol obtained from succinic acid and butanediol (hydroxyl value = 32 mgKOH/g, manufactured by Evonik Degussa Japan Co., Ltd. under the trade name of DYNACOLL 7390).

The followings were used as the polyesterpolyol (a2):

(a2-1): crystalline polyesterpolyol obtained from dodecanedioic acid and hexanediol (hydroxyl value = 32 mgKOH/g, manufactured by Ube Industries, Ltd. under the trade name of ETERNACOLL 3010), and
(a2-2): crystalline polyesterpolyol obtained from dodecanedioic acid and ethylene glycol (hydroxyl value = 32 mgKOH/g, manufactured by Evonik Degussa Japan Co., Ltd.
under the trade name of DYNACOLL 7330).

The followings were used as the polyetherpolyol (a3):

(a3-1): polypropylene glycol (weight average molecular weight = 1000, manufactured by Wako Pure Chemical Industries, Ltd. under the trade name of PPG1000)),
(a3-2): polypropylene glycol (weight average molecular weight = 2000, manufactured by Wako Pure Chemical Industries, Ltd. under the trade name of PPG2000),
(a3-3): polyethylene glycol (weight average molecular weight = 400, manufactured by Wako Pure Chemical Industries, Ltd. under the trade name of PEG400), and
(a3-4): bisphenol A ethylene oxide modified (liquid, hydroxyl value = 168 mgKOH/g, manufactured by Sanyo Chemical Industries., Ltd. under the trade name of NEW POLE BPE-100).

The following was used as the isocyanate compound (b):

(b-1): 4,4'-diphenylmethane diisocyanate (manufactured by Nippon Polyurethane Industry Co., Ltd. under the trade name of MILLIONATE MTF)).

The followings were used as other components (c):

(c-1) tackifier resin: copolymer of methyl methacrylate and butyl methacrylate (glass transition temperature = 75°C, weight average molecular weight = 30,000, manufactured by MITSUBISHI RAYON CO., LTD. under the trade name of BR-113),
(c-2) tackifier resin: copolymer of methyl methacrylate and butyl methacrylate (glass transition temperature = 50°C, weight average molecular weight = 60,000, manufactured by MITSUBISHI RAYON CO., LTD. under the trade name of BR-106),

(c-3) tackifier resin: polyester obtained by a reaction of terephthalic acid with polyol (manufactured by Toyobo Co., Ltd. under the trade name of GA6400), and
(c-4) plasticizer: adipic acid ester of isononyl alcohol (having 9 carbon atoms) (manufactured by Wako Pure Chemical Industries, Ltd. under the trade name of DINA).

<Production of Moisture-Curable Hot Melt Adhesive>

In accordance with the formulation (parts by weight) shown in Table 1 and Table 2, polyol(s) (a) and other components (c) were charged in a separable flask, followed by stirring under reduced pressure at 125˚C for 90 minutes and further dehydration. After lowering the temperature to 105˚C, an isocyanate compound (b) was charged in the flask to prepare a urethane prepolymer. After reducing the pressure (to about 1 mmHg or less), the obtained urethane prepolymer was stirred as it is at 105˚C for 2 hours. Thereafter, the prepolymer was taken out from the flask, and charged in a glass bottle, followed by sealing to obtain moisture-curable hot melt adhesives of Examples and Comparative Examples. Any moisture-curable hot melt adhesive had the viscosity applicable at 120˚C.
With respect to the moisture-curable hot melt adhesives of Examples and Comparative Examples, the respective physical properties were measured. The measuring methods and evaluation criteria are described below.

<Measurement of Shear Elastic Modulus (40˚C and 80˚C) in Uncured State under Moisture>

Using a dynamic viscoelastic analyzer (manufactured by TA Instruments. Japan under the trade name of AR-G2), a shear elastic modulus (G') at 40˚C and 80˚C in an uncured state of a moisture-curable hot melt adhesive was determined. Two plates were laminated to each other using the moisture-curable hot melt adhesive and the shear elastic modulus (G') was measured.
Specifically, using a parallel plate having a diameter of 25 mm made of aluminum as a detector, another parallel plate was warmed to 120˚C and a moisture-curable hot melt adhesive in a molten state warmed to 120˚C in a closed container was dropped on the warmed plate. The moisture-curable hot melt adhesive was interposed between the plate as the detector and the warmed plate, and a distance between the plates was adjusted to 1,500 μm. Two plates was once cooled to room temperature (20 to 25˚C) and then the temperature of the moisture-curable hot melt adhesive was respectively raised to 40˚C and 80˚C at a temperature raising rate of 5˚C/minute. Immediately after reaching each temperature, the shear elastic modulus (G') was measured at a frequency of 1 Hz.

<Measurement of Melting Point>

Using a differential scanning calorimeter (DSC) (manufactured by SII NanoTechnology Inc. under the trade name of DSC6620), the melting point was measured. After precisely weighing 10 mg of a sample, the sample was set in a chamber and the inside of the chamber was once cooled to -70˚C. Thereafter, the sample was heated to 120˚C at a temperature raising rate of 5˚C/minute. A peak top of the obtained endothermic peak was regarded as the melting point. When a plurality of endothermic peaks were observed, a peak top of the peak having the largest endothermic peak area was regarded as the melting point.

<Method for Measurement of Viscosity at 120˚C>

A moisture-curable hot melt adhesive stored in a closed container was melted by heating to 120˚C. After collecting 10.5 to 11.5 g of a sample, the sample was charged in a viscosity can of Brookfield Viscometer. After maintaining the temperature at 120˚C for 30 minutes, the viscosity was measured using a No. 27 spindle.

<Method for Measurement of NCO Group Content>

NCO group content in an uncured state under moisture at the time of hot melt bonding was measured by a back titration method using dibutylamine. Specifically, the following operations were carried out and the NCO group content was determined using the following calculation formula (I).

(i) After weighing about 3 g of a sample (moisture-curable hot melt adhesive) in an Erlenmeyer flask with a stopper, the weight thereof is precisely measured.
(ii) Ethyl acetate (20 ml) is added to dissolve a sample.
(iii) A 1 N toluene solution (25 ml) of n-dibutylamine is accurately added thereto and, after well mixing while shaking, the obtained solution is left to stand for about 30 minutes.
(iv) After adding isopropyl alcohol (100 ml), bromcresol green indicator (0.8 ml) is added, followed by well shaking.

(v) Titration is carried out using a 0.5N hydrochloric acid standard solution. In particular, a 0.5 N hydrochloric acid standard solution is added drop by drop at around an end point and titration is carried out while stirring sufficiently every time one droplet is added. The point where color changes from blue to yellow is regarded as the end point.
(vi) A blank test is carried out under the same conditions.

$$\text{Calculation formula (I): NCO group content (\%)} = 2.101 \times (A - B) \times f/S$$

where

A: Amount of 0.5N hydrochloric acid standard solution required in blank test (ml)
B: Amount of 0.5N hydrochloric acid standard solution required in titration (ml)
S: Weight of sample (g)
f: Factor of 0.5N hydrochloric acid standard solution

<Material used for Evaluation of Moisture-Curable Hot Melt Adhesive>

A 100 μm thick PET sheet subjected to an adhesiveness facilitating treatment (manufactured by Mitsubishi Plastics, Inc. under the trade name of O300EW36) was used as a "decorative material".
A polyethylene terephthalate film, in which IC modules are bonded on one surface using an adhesive and the IC modules are laminated at intervals in a film feeding direction, was used as a "base material". This was used as an inlet sheet to be used between adhesive layers.

<Evaluation Procedures>

(1) Solidification performances

Immediately after breaking the seal of a moisture-curable hot melt adhesive in a molten state heated to 120°C in a closed container, the moisture-curable hot melt adhesive was applied on the above base material at room temperature (20 to 25°C) in a thickness of 100 μm. After 1 hour, a solidification state was confirmed by touch with fingers.
Evaluation criteria are as follows.

A: An adhesive layer is not deformed by touch with fingers, and a surface of an adhesive layer is free from tackiness.
B: An adhesive layer is not deformed by touch with fingers, and slight tackiness is recognized on a surface of an adhesive layer.
C: Tackiness is recognized on a surface of an adhesive layer, and an adhesive layer is deformed by touch with fingers.

(2) Thermal Reactivation Performance

A moisture-curable hot melt adhesive in a molten state at 120°C was applied on the above decorative material in a thickness of 100 μm to form a coated sheet. Another coated sheet was produced in the same manner.
Both sheets were left standing to cool as they are at room temperature for 60 minutes. The above base material as the inlet sheet was covered on the coating layer of one coated sheet, and the other coated sheet was covered thereon so that the coated surface fits the inlet sheet to obtain a laminate with the constitution of decorative material/adhesive layer/base material/adhesive layer/decorative material.
This laminate was passed through between two metal rolls (rotational speed of 1.5 m/minute) heated to 80°C so that the pressing pressure becomes 0.1 MPa.
Evaluation criteria are described below.

B: After an adhesive layer is thermally reactivated and reflows, neither lifting nor peeling is not observed in the laminate.
C: While an adhesive layer reflow, partial lifting and peeling are observed in the laminate.
D: In pressing between metal rolls, an adhesive layer does not reflow and an laminate is not obtained.

(3) Adhesiveness

A laminate was obtained in the same manner as described in (2).
This laminate was passed through between two metal rolls (rotational speed of 1.5 m/minute) heated to 80˚C so that the pressing pressure becomes 0.1 MPa. The thus obtained laminates were aged under the environment of 15˚C and 50%RH for a week, and then cut into a width in 25 mm to form a strip-shaped specimen. This specimen was subjected to a test in which peeling is carried out by hands while grasping one end in the longitudinal direction of the upper and lower PET sheets by hands.
Evaluation criteria are described below.

B: PET sheet was fractured.
C: Interfacial peeling of an adhesive layer occurred.
-: In pressing between metal rolls, an adhesive layer did not reflow and thus a laminate could not be obtained.

(4) Heat-Resistant Adhesiveness

A laminate was obtained in the same manner as described in (2).
This laminate was passed through between two metal rolls (rotational speed of 1.5 m/minute) heated to 80˚C so that the pressing pressure becomes 0.1 MPa. The thus obtained laminates were aged under the environment of 15˚C and 50%RH for a week, and then cut into a size measuring 10 cm by 10 cm to form a specimen.
This specimen was left to stand in an over at 80˚C for 1 day. After 1 day, the state was confirmed at 80˚C.
Evaluation criteria are as follows.

B: No changes occurred before and after putting in an oven at 80˚C.
C: An adhesion between an adhesive layer and a sheet interface was weak, and lifting and peeling were observed in the laminate.
D: An adhesive layer reflows, and lifting and peeling were observed in the laminate.
-: In pressing between metal rolls, an adhesive layer did not reflow and thus a laminate could not be obtained.

(5) Stamping Characteristics

A laminate was obtained in the same manner as described in (2).
This laminate was passed through between two metal rolls (rotational speed of 1.5 m/minute) heated to 80˚C so that the pressing pressure becomes 0.1 MPa. The thus obtained laminates were aged under the environment of 15˚C and 50%RH for a week, and then the laminate was placed on a 15 mm thick silicone rubber substrate with a hardness value of 70 measured by a hardness tester (Asker C), and the laminate was stamped using a blade frame of a No. 3 dumbbell defined in a JIS K6251 dumbbell test.
Evaluation criteria are as follows.

B: A fracture surface was free from burr, and stamping could be satisfactorily carried out.
C: Burr occurred on a fracture surface.
D: Peeling was partially observed on a fracture surface.
-: In pressing between metal rolls, a laminate could not be obtained.

(6) Appearance (Design properties, Foaming resistance)

A laminate was obtained in the same manner as described in (2).
This laminate was passed through between two metal rolls (rotational speed of 1.5 m/minute) heated to 80˚C so that the pressing pressure becomes 0.1 MPa. The thus obtained laminates were aged under the environment of 15˚C and 50%RH for a week.
Evaluation criteria are as follows.

B: No lifting was observed in the laminate.
C: Lifting was observed in the laminate due to foaming of an adhesive layer.

Table 1

| | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Polyol (a) | (a1-1) | 87.5 | | 61.8 | 53.7 | 26.8 | | 27.2 | 85.3 | | 83.1 |
| | (a1-2) | | 94.5 | | | | | | | | |
| | (a1-3) | | | 26.5 | | | | | | | |
| | (a1-4) | | | | | | | | | 66.7 | |
| | (a1-5) | | | | | | 22.9 | | | | |
| | (a1-6) | | | | | | | | 2.3 | | |
| | (a2-1) | | | | 8.8 | 7.5 | | | | | |
| | (a2-2) | | | | | 11.2 | | | | | 4.4 |
| | (a3-1) | | | | | | 50.4 | | | | |
| | (a3-2) | | | | | | | 53.2 | | | |
| | (a3-3) | | | | | | | | | | |
| | (a3-4) | | | | 17.6 | 29.1 | | | | | |
| Isocyanate compound (b) | (b-1) | 12.5 | 5.5 | 11.7 | 19.9 | 25.4 | 26.7 | 19.6 | 12.4 | 33.3 | 12.5 |
| Other components (c) | (c-1) | | | | | | 8.9 | 33.2 | | | |
| | (c-2) | | | | | | 8.9 | | | | |
| | (c-3) | | | | | | | | | | |
| | (c-4) | | | | | | | | 4.6 | | |
| Parts by weight of (a) to (b) in total | | 100 | 100 | 100 | 100 | 100 | 100 | 100 | 100 | 100 | 100 |
| Urethane polymer (A) | (A1) | ○* | ○ | ○ | ○ | ○ | ○ | ○ | ○ | ○ | ○ |
| | (A2) | | | | ○ | ○ | | | | | ○ |

(continued)

| | Example 1 | Example 2 | Example 3 | Example 4 | Example 5 | Example 6 | Example 7 | Example 8 | Example 9 | Example 10 |
|---|---|---|---|---|---|---|---|---|---|---|
| (A3) | | | | ○ | ○ | ○ | ○ | | | |
| Molar ratio of NCO/OH during production of (A) | 2 | 2 | 2 | 1.8 | 1.8 | 2.1 | 1.6 | 2 | 2 | 2 |
| Shear elastic modulus at 40°C in uncured state (Pa) | $1.2 \times 10^7$ | $1.6 \times 10^7$ | $2.8 \times 10^7$ | $9.0 \times 10^8$ | $4.5 \times 10^6$ | $2.1 \times 10^7$ | $6.0 \times 10^5$ | $4.9 \times 10^4$ | $1.9 \times 10^4$ | $3.0 \times 10^7$ |
| Shear elastic modulus at 80°C in uncured state (Pa) | $3.0 \times 10^1$ | $1.6 \times 10^1$ | $2.0 \times 10^0$ | $7.8 \times 10^0$ | $2.7 \times 10^0$ | $2.1 \times 10^0$ | $3.2 \times 10^2$ | $8.5 \times 10^3$ | $1.1 \times 10^0$ | $1.1 \times 10^2$ |
| Melting point (°C) | 52 | 55 | 49 | 50 | 50 | 63 | 52 | 52 | 49 | 54 |
| Melt viscosity at 120°C (mPa·s) | 7,000 | 28,000 | 85,000 | 5,000 | 4,000 | 4,500 | 9,000 | 1,800 | 1,550 | 7,500 |
| Isocyanate content in uncured state (%) | 2.1 | 0.9 | 2 | 3 | 3.8 | 3.5 | 1.4 | 2 | 5.6 | 2.1 |
| Solidification performance | A | A | A | A | A | A | B | A | B | A |
| Heat reactivation performance | B | B | B | B | B | B | B | B | B | B |
| Adhesion performance | B | B | B | B | B | B | B | B | B | B |
| Heat-resistant adhesiveness | B | B | B | B | B | B | B | B | B | B |
| Stamping characteristic | B | B | B | B | B | B | B | B | B | B |
| Appearance (Design properties, Foaming resistance) | B | B | B | B | B | B | B | B | B | B |
| Note) The symbol * means the urethane polymer used in each Example. | | | | | | | | | | |

Table 2

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Polyol (a) | (a1-1) | 4 | | | 72.6 | | | 96.6 |
| | (a1-2) | | | | | | | |
| | (a1-3) | | | | | | | |
| | (a1-4) | | | | | | | |
| | (a1-5) | | | | | | | |
| | (a1-6) | | | | 14.9 | | | |
| | (a2-1) | | | | | 87.5 | | |
| | (a2-2) | | | | | | | |
| | (a3-1) | | 11.8 | | | | | |
| | (a3-2) | 76.4 | | | | | | |
| | (a3-3) | | | 47.4 | | | | |
| | (a3-4) | | 47.1 | 11.9 | | | | |
| Isocyanate compound (b) | (b-1) | 19.6 | 41.1 | 40.7 | 12.5 | 12.5 | 0 | 3.4 |
| Other components (c) | (c-1) | | | | | | | |
| | (c-2) | | | | | | | |
| | (c-3) | | | | | | 100 | |
| | (c-4) | | | | | | | |
| Parts by weight of (a) to (b) in total | | 100 | 100 | 100 | 100 | 100 | 0 | 100 |
| Urethane polymer (A) | (A1) | ○* | | | ○ | | | ○ |
| | (A2) | | | | | ○ | | |
| | (A3) | ○ | ○ | ○ | | | | |

(continued)

| | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| Molar ratio of NCO/OH during production | of (A) | 2 | 2 | 2.5 | 2 | 2 | - | 0.5 |
| Shear elastic modulus at 40˚C in uncured state (Pa) | | $1.0 \times 10^0$ | $3.0 \times$ | $10^1$ $2.8 \times 10^0$ | $1.5 \times 10^7$ | $2.8 \times 10^7$ | $7.0 \times 10^5$ | $1.2 \times 10^7$ |
| Shear elastic modulus at 80˚C in uncured state (Pa) | | $2.0 \times 10^{-1}$ | $3.0 \times 10^{-1}$ | $2.2 \times 10^{-1}$ | $2.0 \times 10^5$ | $1.3 \times 10^2$ | $3.0 \times 10^5$ | $3.2 \times 10^1$ |
| Melting point (˚C) | | 52 | None | None | 50 | 70 | 86 | 51 |
| Melt viscosity at 120˚C (mPa·s) | | 1,000 | 1,100 | 1,200 | 12,000 | 10,000 | 33,000 | 4,000 |
| Isocyanate content in uncured state (%) | | 3.3 | 6.9 | 8.2 | 2.1 | 2.1 | 0 | 0 |
| Solidification performance | | C | C | C | A | A | A | A |
| Heat reactivation performance | | C | C | C | D | B | C | B |
| Adhesion performance | | B | B | B | - | C | B | B |
| Heat-resistant adhesiveness | | B | B | B | - | C | D | D |
| Stamping characteristic | | C | B | B | - | D | D | D |
| Appearance (Design properties, Foaming resistance) | | B | B | C | - | B | B | B |
| Note) The symbol * means the urethane polymer used in each Comparative Example. | | | | | | | | |

The laminate produced in the present Example includes an IC module in a base material. Assuming that the laminate is a substitute for an IC card, the moisture-curable hot melt adhesive was applied and evaluation was carried out.

As is apparent from Table 1, since the moisture-curable hot melt adhesives for an IC card of Examples 1 to 10 include a chemical structure (A1), a shear elastic modulus (40˚C) in an uncured state under moisture is from ($1 \times 10^4$) to ($1 \times 10^8$) Pa, and a shear elastic modulus (80˚C) in an uncured state under moisture is from ($1 \times 10^0$) to ($1 \times 10^4$) Pa, they satisfy all requirements described in claim 1 of the present application. Since the laminates obtained by using the moisture-curable hot melt adhesives of Examples 1 to 10 are satisfactory in all evaluation items and are particularly excellent in solidification performance, it is apparent that they can be efficiently produced.

In contrast, as is apparent from Table 2, the moisture-curable hot melt adhesives for an IC card of Comparative Examples 1 to 7 do not satisfy some of requirements described in claim 1 of the present application. In other words, the moisture-curable hot melt adhesives for an IC card of Comparative Examples 1 to 7 do not include the chemical structure (A1), or the shear elastic modulus (40˚C) or (80˚C) in an uncured state under moisture deviates from the scope of the value described in claim 1 of the present application. The laminates obtained by using the moisture-curable hot melt adhesives of Comparative Examples 1 to 7 are poor in some of evaluation items.

As is apparent from these results, the moisture-curable hot melt adhesive for an IC card according to claim 1 of the present application is very useful for improving productive efficiency while maintaining performances of the IC card.

Related Applications

This application claims priority under the Paris Convention or Article 4 based on Japanese Patent Application No. 2009-128647 filed on May 28, 2009 in Japan, the disclosure of which is incorporated by reference herein.

## Claims

1. A moisture-curable hot melt adhesive for an IC card, including (A) a urethane prepolymer having an isocyanate group at the end,
wherein the urethane prepolymer (A) includes a chemical structure (A1) derived from a polyesterpolyol (a1) obtained by the reaction of a diol with a dicarboxylic acid having 10 or less carbon atoms,
a shear elastic modulus (at 40˚C) in an uncured state under moisture is from ($1 \times 10^4$) to ($1 \times 10^8$) Pa, and
a shear elastic modulus (at 80˚C) in an uncured state under moisture is from ($1 \times 10^0$) to ($1 \times 10^4$) Pa.

2. The moisture-curable hot melt adhesive for an IC card according to Claim 1, wherein the urethane prepolymer (A) further includes a chemical structure (A2) derived from a polyesterpolyol (a2) obtained by the reaction of a diol with an aliphatic dicarboxylic acid having 11 or more and 18 or less carbon atoms, and/or a chemical structure (A3) derived from a polyetherpolyol (a3).

3. An IC card obtained by using the moisture-curable hot melt adhesive for an IC card according to Claim 1 or 2.

## INTERNATIONAL SEARCH REPORT

International application No.
PCT/JP2010/058343

A. CLASSIFICATION OF SUBJECT MATTER
*C09J175/04*(2006.01)i, *C09J175/06*(2006.01)i, *C09J175/08*(2006.01)i, *G06K19/077*(2006.01)i

According to International Patent Classification (IPC) or to both national classification and IPC

B. FIELDS SEARCHED

Minimum documentation searched (classification system followed by classification symbols)
C09J1/00-201/10, G06K19/077

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2003-327647 A (Sekisui Chemical Co., Ltd.), 19 November 2003 (19.11.2003), claims 1 to 3; paragraphs [0003], [0009]; examples 1 to 2 (Family: none) | 1-3 |
| Y | JP 2001-262112 A (Sekisui Chemical Co., Ltd.), 26 September 2001 (26.09.2001), claims 1 to 2; paragraphs [0042], [0053]; examples 1 to 2 (Family: none) | 1-3 |
| Y | JP 2000-148959 A (Henkel Japan Ltd.), 30 May 2000 (30.05.2000), claims 1 to 4 & US 6649014 B1 & EP 1131786 A1 & WO 2000/030031 A1 | 1-3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 August, 2010 (05.08.10) | 17 August, 2010 (17.08.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/058343

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2005-036128 A (Sekisui Chemical Co., Ltd.), 10 February 2005 (10.02.2005), claims 1 to 6 (Family: none) | 1-3 |
| Y | JP 2005-332384 A (Konica Minolta Holdings, Inc.), 02 December 2005 (02.12.2005), claims 1 to 2; paragraph [0007] (Family: none) | 1-3 |
| Y | JP 05-025455 A (Sekisui Chemical Co., Ltd.), 02 February 1993 (02.02.1993), claim 1; examples 1 to 3 (Family: none) | 1-3 |
| Y | JP 08-113770 A (Sekisui Chemical Co., Ltd.), 07 May 1996 (07.05.1996), claims 1 to 3; examples 2 to 4 (Family: none) | 1-3 |
| Y | JP 11-323302 A (Sekisui Chemical Co., Ltd.), 26 November 1999 (26.11.1999), claims 1 to 3; example 1 (Family: none) | 1-3 |
| Y | JP 2006-273986 A (Aica Kogyo Co., Ltd.), 12 October 2006 (12.10.2006), claims 1 to 3; examples 1 to 5 (Family: none) | 1-3 |
| Y | JP 2008-094960 A (Aica Kogyo Co., Ltd.), 24 April 2008 (24.04.2008), claim 1; examples 1 to 5 (Family: none) | 1-3 |
| Y | JP 2008-094959 A (Aica Kogyo Co., Ltd.), 24 April 2008 (24.04.2008), claims 1 to 2; examples 1 to 2 (Family: none) | 1-3 |
| Y | JP 2007-254512 A (Aica Kogyo Co., Ltd.), 04 October 2007 (04.10.2007), claim 1; example 1 (Family: none) | 1-3 |
| Y | JP 2004-155860 A (Sekisui Chemical Co., Ltd.), 03 June 2004 (03.06.2004), claims 1 to 2; examples 1 to 4 (Family: none) | 1-3 |

Form PCT/ISA/210 (continuation of second sheet) (July 2009)

**INTERNATIONAL SEARCH REPORT**

International application No.
PCT/JP2010/058343

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-345298 A (Toppan Printing Co., Ltd.), 14 December 1999 (14.12.1999), claims 1 to 5 (Family: none) | 1-3 |
| A | JP 2001-022912 A (Konica Corp.), 26 January 2001 (26.01.2001), claims 1 to 3 (Family: none) | 1-3 |
| A | WO 2006/080400 A1 (Emulsion Technology Co., Ltd.), 03 August 2006 (03.08.2006), claims 1 to 15 & US 2008/0102268 A1 & KR 2007-0095401 A & CN 101133426 A | 1-3 |

Form PCT/ISA/210 (continuation of second sheet) (July 2009)

INTERNATIONAL SEARCH REPORT

International application No.
PCT/JP2010/058343

With respect to claims 1-3

Although claims 1-3 specify the invention by a parameter such that "the shear modulus (at 40°C) before moisture curing is $(1 \times 10^4)-(1 \times 10^8)$ Pa and the shear modulus (at 80°C) before moisture curing is $(1 \times 10^0)-(1 \times 10^4)$ Pa", only moisture-curable hot melt adhesives for IC cards containing a urethane prepolymer that has an isocyanate group at an end, while having a chemical structure derived from a crystalline polyester polyol that is obtained by a reaction between a specific diol and a specific dicarboxylic acid are disclosed within the meaning of PCT Article 5. Consequently, claims 1-3 are not fully supported within the meaning of PCT Article 6.

In addition, since the parameter is not one that is usually used in the art, the scope of moisture-curable hot melt adhesives for IC cards specified by the parameter cannot be specified even by taking the common technical knowledge at the time of filing into consideration. Consequently, claims 1-3 fail to satisfy the requirement of clearness prescribed under PCT Article 6.

This international search report therefore covers those specifically disclosed by the description, namely moisture-curable hot melt adhesives for IC cards containing a urethane prepolymer that has an isocyanate group at an end, while having a chemical structure derived from a crystalline polyester polyol that is obtained by a reaction between hexanediol and adipic acid or sebacic acid.

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000148959 A
- JP 2005036128 A
- JP 2005332384 A
- JP 2009128647 A